# EUROPÄISCHE PATENTSCHRIFT

(11) **EP 0 392 246 B1**
(45) Veröffentlichungstag und Bekanntmachung des Hinweises auf die Patenterteilung: **24.05.1995**
(21) Anmeldenummer: 90105714.1
(22) Anmeldetag: 26.03.1990
(51) Int. Cl.: H04B 17/02, H04B 3/46

(54) **Überwachungs- und Steuerungssystem für digitale Nachrichtenübertragungssysteme mit Master und Ersatzmaster**
Monitoring and control system for digital information transmission systems with master and substitution master
Système de surveillance et de commande pour systèmes de transmission d'informations numériques avec maître et maître de substitution

(30) Priorität: 13.04.1989 DE 3912180
(43) Veröffentlichungstag der Anmeldung: 17.10.1990
(73) Patentinhaber: SIEMENS AKTIENGESELLSCHAFT, 80333 München (DE)
(72) Erfinder: Narjes, Ferdinand, Ing.-Grad., D-8000 München 70 (DE); Weimert, Günter, Dipl.-Ing., D-8000 München 70 (DE)

(56) Entgegenhaltungen:
- EP-A- 0 143 489
- EP-A- 0 215 437
- EP-A-00 385 126

## Beschreibung

Die Erfindung betrifft ein Verfahren entsprechend dem Oberbegriff des Anspruchs 1.

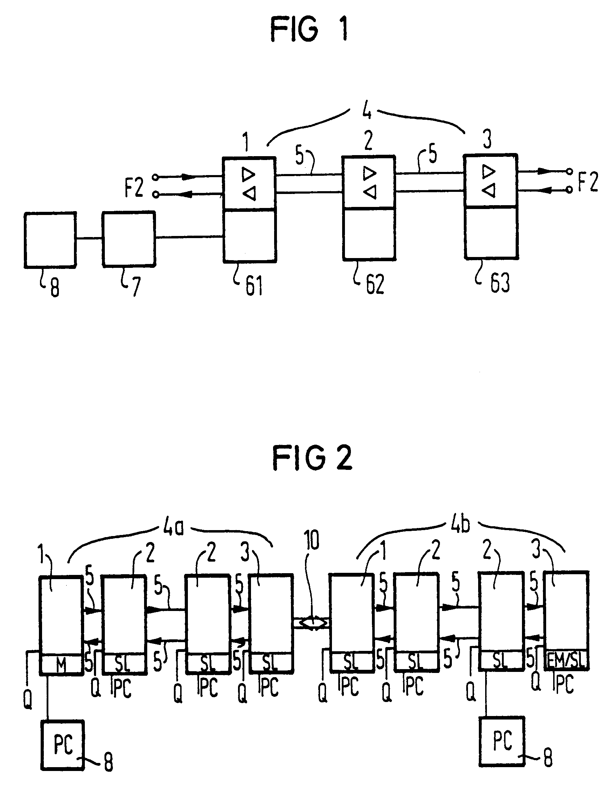

Digitale Nachrichtenübertragungssysteme enthalten entsprechend der Fig.1 Leitungsendgeräte 1 und 3, zwischen denen ein oder mehrere Zwischenregeneratoren 2 angeordnet sind, die über Lichtwellenleiter 5 oder Koaxialkabel miteinander verbunden sind. In den Leitungsendgeräten 1 und 3 sowie den Zwischenregeneratoren 2 sind Fehlererkennungseinrichtungen enthalten, die beispielsweise Verletzungen der laufenden digitalen Summe oder anderer Eigenschaften des verwendeteten Kodierungsverfahrens feststellen und an unmittelbar angeschlossene Prozessoreinheiten 61, 62, 63 abgeben. Über eine besondere Verbindung oder über einen zusätzlichen Nachrichtenkanal im digitalen Nutzsignal werden die Fehlermeldungen der einzelnen Prozessoreinheiten zu einer zentralen Stelle übermittelt und von dieser entsprechend ausgewertet.

Ein Verfahren zur In-Betrieb-Überwachung einer Nachrichtenübertragungseinrichtung, bei der Nutzsignale über eine elektrooptische Übertragungsstecke und die Überwachungsinformationen der Prozessoreinheiten als Telemetriesignale über einen Hilfskanal übertragen werden, ist bereits bekannt.

Das auch als "Polling" bezeichnete Verfahren zum Aufruf einer auch als Slave bezeichneten Unterstation von einer auch als Master bezeichneten Hauptstation aus, setzt eine Adressierung der einzelnen Stationen voraus. Eine derartige Adressierung ist in der EP-A-385126 veröffentlicht am 5.9.90 beschrieben. Bei einem derartigen Adressierungsverfahren kann eine Prozessoreinheit als Master und die anderen Prozessoreinheiten als Slaves eingestellt werden, es können auch sämtliche Prozessoreinheiten als Slave eingestellt werden, dann ist aber einer dieser Prozessoreinheiten, beispielsweise der Prozessoreinheit 61 ein zusätzlicher Ortungsmodul 7 zuzuordnen, der die Funktionen eines Masters erfüllt und mit einem Personalcomputer 8 seinerseits verbunden ist.

Bei einem derartigen Überwachungs- und Steuerungssystem kann es durch eine Unterbrechung des Telemetrieweges, also beispielsweise durch die Störung eines Lichtwellenleiters oder durch Störungen innerhalb einer Prozessoreinheit zum Teil- oder Totalausfall des Überwachungssystems kommen.

Die Aufgabe der Erfindung besteht darin, den Ort einer Unterbrechung des Telemetriesignalweges innerhalb oder zwischen einzelnen Prozessoreinheiten festzustellen und den funktionsgerechten Betrieb des gestörten Ortungs- und Überwachungsabschnittes während der Unterbrechung sicherzustellen.

Die Aufgabe wird bei einem Verfahren der eingangs erwähnten Art dadurch gelöst, daß dies durch die im Kennzeichen des Patentanspruchs 1 angegebenen Merkmale weitergebildet ist. Von besonderem Vorteil beim erfindungsgemäßen Verfahren ist die Möglichkeit, den für das Verfahren benötigten Ersatzmaster wie einen üblichen Master aufzubauen.

Eine bevorzugte Weiterbildung des Verfahrens, die eine Ortung der Unterbrechung auch nur einer Übertragungsrichtung gestattet, ist im Patentanspruch 2 beschrieben.

Die Erfindung soll im folgenden anhand eines in der Zeichnung dargestellten Ausführungsbeispiels näher erläutert werden.

In der Zeichnung zeigt
- Fig. 1: einen Digitalsignal-Grundleitungsabschnitt nach dem Stande der Technik und
- Fig. 2: zwei in Kette geschaltete Digitalsignal-Grundleitungsabschnitte mit jeweils zwei Leitungsendgeräten, einem Master und einem Ersatzmaster.

Die Figur 1 ist bei der Erläuterung des Standes der Technik bereits ausreichend erklärt worden, so daß an dieser Stelle nicht weiter darauf eingegangen wird.

In der Figur 2 sind zwei im folgenden als Leitungsabschnitte bezeichnete Digitalsignal-Grundleitungsabschnitte 4a, 4b über bidirektionalen ISM-Bus 10 zur Übertragung der Telemetriesignale in beiden Richtungen miteinander verbunden. Jeder dieser Leitungsabschnitte enthält ein Leitungsendgerät 1 bzw. 3 sowie Zwischenregeneratoren 2, die über Verbindungsleitungen 5 in Form von Lichtwellenleitern oder Koaxialkabeln miteinander und mit den Leitungsendgeräten verbunden sind. Jedem der Leitungsendgeräte 1, 3 und jedem der Regeneratoren ist eine Prozessoreinheit zugeordnet, wobei die Prozessoreinheit des ersten Leitungsendgerätes 1 des ersten Leitungsabschnittes 4a in den Modus eines Master M, die Prozessoreinheit des letzten Leitungsendgerätes 3 des zweiten Leitungsabschnittes 4b in den Modus eines Slave SL mit der Möglichkeit der Umschaltung in den Modus eines Ersatzmasters EM und alle anderen Prozessoreinheiten in den Modus eines Slave SL geschaltet sind. Für die Auswertung der vom Master übermittelten Überwachungsergebnisse und für Befehlseingaben ist an den Master ein Personalcomputer 8 angeschlossen. Auch die in den Modus eines Slave SL geschalteten Prozessoreinheiten verfügen über Anschlüsse für einen Personalcomputer PC, die jedoch nicht dauernd mit dem Personalcomputer verbunden sein müssen. Der Personalcomputer 8 kann entfallen, wenn stattdessen mit dem Ausgang des Masters eine entsprechende Auswerteeinheit verbunden ist. Zusätzlich enthalten die mit den Regeneratoren bzw. den Leitungsendgeräten unmittelbar verbundenen Überwachungseinrichtungen einen Anschluß Q, an dem ein Signalsammelsystem angeschlossen sein kann.

Die Digitalsignal-Übertragungsstrecke, zu der die beiden Leitungsabschnitte 4a, 4b gehören, ist Teil einer Übertragungseinrichtung der international genormten synchronen digitalen Hierarchie. Die Leitungsendgeräte können dabei zu synchronen Leitungsmultiplexern erweitert sein, die Zwischenregeneratoren sind synchrone Leitungsregeneratoren.

Der Telemetriekanal, über den die einzelnen Slave mit dem Master verbunden sind, ist innerhalb eines Leitungsabschnittes in diesem Falle einer der der nationalen Benützung vorbehaltenen Kanäle des sogenannten Overheads des digitalen Übertragungssystems. Am Ende des jeweiligen Leitungsabschnittes wird der Telemetriekanal aus dem Overhead ausgekoppelt und mittels einer Bugleitung (ISM-Bus) 10 zum Leitungsendgerät des nächsten Leitungsabschnittes übertragen und dort wieder in den Kanal des Overheads des digitalen Übertragungssystems eingekoppelt. Das Telegrammübertragungsnetz mit einer Struktur entsprechend dem des Hauptnetzes, kann als Linie mit einem oder mehreren in Kaskade geschalteten Leitungsabschnitten 4, als Netz mit parallelen Linien oder als mit Abzweigungen versehenes Sternnetz aufgebaut sein.

Innerhalb eines Leitungsabschnittes 4 werden die Überwachungsdaten der Leitungsendgeräte 1, 3 und der Zwischenregeneratoren 2 von einer Prozessoreinheit zur nächsten Prozessoreinheit z. B. von der Prozessoreinheit 61 zur Prozessoreinheit 62 bzw. umgekehrt jeweils über den Telemetriekanal übertragen.

Innerhalb einer Linie werden die Überwachungsdaten von Leitungsendgerät 1 bzw. 3 zu Leitungsendgerät 3 bzw. 1 gegebenenfalls von einem Leitungsabschnitt zum nächsten Leitungsabschnitt, z. B. vom Leitungsabschnitt 4a zum Leitungsabschnitt 4b oder vom Leitungsabschnitt 4b zum Leitungsabschnitt 4a jeweils über den ISM-Bus 10 der betreffenden Prozessoreinheit übertragen.

Das Überwachungsverfahren ermöglicht es, in einer beidseitig mit einem Leitungsendgerät 1, 3 abgeschlossenen Grundleitung während des Betriebs die Leitungsendgeräte 1, 3 und Zwischenregeneratoren 2 zu überwachen und im Fehlerfall das gestörte Regeneratorfeld einzugrenzen.

Das In-Betrieb-Überwachungsverfahren (In-Service-Monitoring, ISM) arbeitet nach dem Pollingprinzip. Die Abfrage der einzelnen Geräte wird im Regelfall zentral von einem bezüglich der ISM-Einrichtung als Master geschalteten Leitungsendgerät 1, 3 gesteuert, das sich an einem Ende des Ortungsabschnittes befindet.

Ein Leitungsendgerät 1 wird mit Hilfe eines Kodierschalters oder - über einen an das Gerät angeschlossenen Personalcomputer 8 - per Steuerbefehl als Master oder Slave eingestellt.

Der Master fragt zentral die zu überwachenden Geräte - Zwischenregeneratoren 2 und Leitungsendgeräte 1, 3 - zyklisch mit ihrer Adresse durch Aussenden eines Aufruftelegramms ab.

Innerhalb dieses Zyklus ruft er auch die eigene Station auf und sendet anschließend wie ein Slave die Daten seiner Station aus. Er empfängt die von den aufgerufenen Geräten gesendeten Antworttelegramme, vergleicht die eingehenden Daten mit eingegebenen Schwellwerten und löst bei Überschreiten der Schwellwerte Alarme aus.

Stellt der Master während des Pollzyklus fest, daß er von einem Gerät innerhalb einer Wartezeit von z. B. 0,2 Sekunden nach dem Aufruf keine Antwort empfängt, so setzt er den Pollzyklus mit dem nächsten Gerät fort.

Nach einem Pollzyklus gibt der Master mit einem Telegramm an alle Geräte ein Zeitintervall von z. B. mindestens 0,2 Sekunden frei, in dem der Befehl für eine Neuadressierung abgesetzt werden kann.

Die minimale Zykluszeit einschließlich des freigegebenen Zeitintervalls nach einem Pollzyklus beträgt z. B. 1,2 Sekunden.

Bei einem derartigen Überwachungs- und Steuerungssystem mit für die Telemetriesignale vorgesehenen Verbindungen zwischen den Slaves und dem Master kann beispielsweise durch äußere Einflüsse eine derartige Verbindung oder auch ein Slave oder der Master gestört sein. In diesen Fällen kann der Betrieb des digitalen Nachrichtenübertragungssystems, also das Nutzsignalsystems ebenfalls gestört sein, die Störung kann sich aber auch nur auf das Überwachungs- und Steuerungssystem beschränken. Insbesondere bei einer Störung, die sich auf einen Ortungsabschnitt des Überwachungs- und Steuerungssystems beschränkt, ist es erwünscht, mittels zusätzlicher Maßnahmen einen funktionsgerechten Betrieb des gestörten Ortungsabschnittes zu ermöglichen. Zu diesem Zweck ist am anderen Ende des Ortungsabschnittes ein besonderer Slave vorgesehen, der sich automatisch in den Zustand eines Ersatzmasters umschalten kann. Voraussetzung für die Umschaltung ist dabei, daß am anderen Ende des Ortungsabschnittes vom Master für eine vorgewählte Zeit kein Aufruftelegramm empfangen wurde. Nach dem Umschalten in den Modus eines Ersatzmasters nimmt dieser den Pollbetrieb auf, er sendet also an alle Prozessoreinheiten des Ortungsabschnittes nacheinander Aufruftelegramme.

Entsprechend den Möglichkeiten der Störung, daß also nur die eine oder die andere Übertragungsrichtung oder aber auch beide gestört sind, ergeben sich verschiedene Betriebsarten des Masters und des Ersatzmasters.

Zunächst wird davon ausgegangen, daß der Ersatzmaster auf seine Aufruftelegramme hin Antworttelegramme von nur einigen Prozessoreinheiten des Ortungsabschnittes empfängt. Aus den Adressen der erhaltenen Antworttelegramme und damit den Adressen der fehlenden Prozessoreinheiten ist der-Ort der Störung vom Ersatzmaster aus ermittelbar.

Wenn die Störung dadurch verursacht wurde, daß sowohl die Hin- als auch die Rückrichtung unterbrochen wurde, dann empfängt der Master keine Aufruftelegramme des Ersatzmasters und erhält seinen Pollbetrieb aufrecht.

Es besteht aber auch die Möglichkeit, daß nur die Übertragungsrichtung vom Master zum Ersatzmaster unterbrochen ist, der Master aber über die Rückrichtung Aufruftelegramme des Ersatzmasters empfängt. In diesem Fall unterbricht der Master seinen Pollbetrieb so lange, wie er Aufruftelegramme des Ersatzmasters empfängt.

Der Ersatzmaster hält seinen Pollbetrieb so lange aufrecht, bis er auf seinen Aufruf hin von allen Prozessoreinheiten des Ortungsabschnittes ein Antworttelegramm erhalten hat. Anschließend sendet er ein Telegramm an den Master, in dem er den Pollbetrieb des Masters freigibt und schaltet seinen Pollbetrieb ab. Der Master schaltet nach Erhalt des Freigabetelegramms oder wenn er innerhalb einer vorgegebenen Zeit von beispielsweise 30 s kein Aufruftelegramm erhält wieder in den eigenen Pollbetrieb um.

Wie bereits ausgeführt, ist zunächst nur am Ort des pollenden Masters bzw. Ersatzmasters der Ort der Unterbrechung nur einer Übertragungsrichtung feststellbar. Deshalb ist zusätzlich vorgesehen, daß alle Prozessoreinheiten die Aufruf- und Antworttelegramme aller Prozessoreinheiten überprüfen und im nächsten eigenen Antworttelegramm melden, ob innerhalb des vorangegangenen Pollzyklus jedem Aufruftelegramm ein entsprechendes Antworttelegramm folgte.

Zur Erläuterung sei zunächst angenommen, daß die Verbindung vom ersten Leitungsendgerät 1 des zweiten Leitungsabschnittes 4b zum Regenerator 2 gestört ist. Da der Ersatzmaster keine Aufruftelegramme des Masters erhalten hatte, ging er in den Pollbetrieb und sendete im vorangehenden Pollzyklus ein erstes Aufruftelegramm an den Master und weiter an alle Geräte im ersten Ortungsabschnitt. Nur von den Geräten nach der Störungsstelle vom Master ausgesehen erhält der Ersatzmaster ein Antworttelegramm. Im folgenden Pollzyklus wird von der ersten und von den folgenden Prozessoreinheiten in beiden Übertragungsrichtungen, also auch zum Master hin gemeldet, ob im vorangehenden Pollzyklus auf Aufruftelegramme hin jeweils entsprechende Antworttelegramme empfangen wurden. Der auf das Leitungsendgerät 1 des zweiten Leitungsabschnittes 4b folgende Regenerator 2 meldet auf seinen Aufruf hin erstmals, daß er im laufenden Pollzyklus auf ein Aufruftelegramm hin kein entsprechendes Antworttelegramm empfangen hat. Diese Meldung wird sowohl in Richtung des Ersatzmasters als auch in Richtung des Masters ausgesendet, sodaß damit auch am Ort des Masters der Ort der Unterbrechung erkennbar wird.

Ein entsprechender Fehler kann auch in der Rückrichtung vom Zwischenregenerator 2 zum Leitungsendgerät 1 des zweiten Grundleitungsabschnittes 4b auftreten. In diesem Falle ist der Ersatzmaster nicht aktiviert, sondern der Master sendet seine Aufruftelegramme aus, die der Zwischenregenerator 2 in beiden Übertragungsrichtungen mit Antworttelegrammen beantwortet. Das Antworttelegramm in Richtung Master wird durch die Störung unterdrückt, sodaß daraus am Ort des Master auf den Störungsort geschlossen werden kann. Zur Lokalisierung der Störung vom nichtpollendem Ersatzmaster bzw. von allen Slaves aus dient die Auswertung der gespeicherten Information der Antworttelegramme des vorangegangenen Pollzyklus, da im vorangegangenen Pollzyklus das Leitungsendgerät 1 des zweiten Leitungsabschnittes 4b wegen der Unterbrechung kein Antworttelegramm des Zwischenregenerators 2 erhalten und dies in seinem eigenen Antworttelegramm gemeldet hat.

Das erfindungsgemäße Verfahren wurde beim Ausführungsbeispiel in Verbindung mit einer Linie als Ortungsabschnitt erläutert. Zur Anwendung bei einem Sternnetz oder einem Parallelnetz ist an jedem anderen Ende der Linie im Ortungsabschnitt ein zum Ersatzmaster umschaltbarer Slave vorgesehen.

## Patentansprüche

1. Verfahren zum funktionsgerechten Betrieb eines gestörten Ortungsabschnittes in einem Überwachungs- und Steuerungssystem für digitale Nachrichtenübertragungssysteme, bei dem im normalen Betrieb mit Adressen versehene Prozessoreinheiten über ein Telegrammübertragungsnetz derart Telemetrieinformationen miteinander austauschen können, daß Abfragetelegramme von einer als Master eingestellten Prozessoreinheit in die eine Übertragungsrichtung und andere Telegramme von als Slaves eingestellten Prozessoreinheiten in beide Übertragungsrichtungen übertragen werden, wobei sowohl dem Master als auch den Slaves feste Adressen zugeordnet sind und der Master an einem Ende des Ortungsabschnittes angeordnet ist,
**dadurch gekennzeichnet**,
daß der am anderen Ende des Ortungsabschnittes angeordnete Slave sich dann in den Modus eines Ersatzmasters umschaltet, wenn er eine angemessene Zeit vom Master kein Aufruftelegramm erhalten hat,
daß der Ersatzmaster anschließend den Pollbetrieb aufnimmt und alle Prozessoreinheiten des Ortungsabschnittes nacheinander aufruft,
daß der Ersatzmaster auf seine Aufruftelegramme hin Antworttelegramme von nicht allen Prozessoreinheiten des Ortungsabschnittes erhält und daraus den Ort der Störung ermittelt,
daß sofern der Master keine Aufruftelegramme des Ersatzmasters empfängt, er seinen Pollbetrieb aufrecht erhält,
daß der Master seinen Pollbetrieb mindestens so lange unterbricht, wie er Aufruftelegramme des Ersatzmasters empfängt oder bis zum Empfang eines Freigabetelegramms und daß der Ersatzmaster seinen Pollbetrieb so lange aufrecht erhält, bis er auf seinen Aufruf hin von allen Prozessoreinheiten des Ortungsabschnittes ein Antworttelegramm erhalten hat.

2. Verfahren nach Patentanspruch 1,
**dadurch gekennzeichnet**,
daß alle Prozessoreinheiten im jeweils nächsten eigenen Antworttelegramm melden, ob innerhalb des vorangegangenen Pollzyklus jedem Aufruftelegramm ein entsprechendes Antworttelegramm folgte, sodaß damit auch am Ort des nichtpollenden Masters der Ort der Unterbrechung innerhalb auch nur einer Übertragungsrichtung feststellbar ist.

## Claims

1. Method for the functionally proper operation of a disturbed locating section in a monitoring and control system for digital information transmission systems, in which in normal operation processor units provided with addresses exchange telemetry information with each other via a telegram transmission network in such a way that enquiry telegrams from a processor unit installed as master are transmitted in one transmission direction and other telegrams from processor units installed as slaves are transmitted in both transmission directions, fixed addresses being allocated both to the master and to the slaves, and the master being arranged at one end of the locating section, characterized in that the slave arranged at the other end of the locating section switches into the mode of a substitute master when it has received no call-up telegram from the master for an appropriate time, in that the substitute master subsequently assumes the polled operation and calls up all processor units of the locating section one after another, in that the substitute master receives reply telegrams to its call-up telegrams from not all the processor units of the locating section and determines therefrom the location of the disturbance, in that, insofar as the master receives no call-up telegrams from the substitute master, it maintains its polled operation, in that the master interrupts its polled operation at least until it receives call-up telegrams from the substitute master or until the receipt of an enabling telegram, and in that the substitute master maintains its polled operation until it has received a reply telegram to its call-up from all the processor units of the locating section.

2. Method according to Patent Claim 1, characterized in that all processor units report in their respective next own reply telegram whether a corresponding reply telegram followed each call-up telegram within the preceding poll cycle, with the result that the location of the disturbance even within only one transmission direction can also be established at the location of the non-polling master.

## Revendications

1. Procédé pour faire fonctionner de façon correcte une section de localisation perturbée dans un système de contrôle et de commande pour des systèmes numériques de transmission d'informations, selon lequel, pendant le fonctionnement normal, des unités à processeur contenant des adresses peuvent échanger entre eux des informations de télémétrie par l'intermédiaire d'un réseau de transmission de télégrammes de telle sorte que des télégrammes d'interrogation sont transmis par l'unité formant processeur réglée en tant que maître, dans la direction de transmission et que d'autres télégrammes peuvent être transmis par des unités à processeur réglées en tant qu'esclaves, dans les deux sens de transmission, des adresses fixes étant associées aussi bien au maître qu'aux esclaves, et le maître étant disposé à une extrémité de la section de localisation,
caractérisé par le fait
que l'esclave situé à l'autre extrémité de la section de localisation est commuté dans le mode d'un maître de remplacement, lorsqu'il n'a reçu aucun télégramme d'appel de la part du maître pendant un intervalle de temps approprié,
que le maître de remplacement exécute ensuite le fonctionnement d'appel et appelle successivement toutes les unités à processeur de la section de localisation,
que le maître de remplacement ne reçoit pas, en réponse à ses télégrammes d'appel, des télégrammes de réponse de la part de toutes les unités à processeur de la section de localisation et détermine, à partir de là, l'emplacement de la perturbation,
que dans la mesure où le maître ne reçoit aucun télégramme d'appel du maître de remplacement, il maintient son fonctionnement d'appel,
que le maître interrompt son fonctionnement d'appel au moins jusqu'à ce qu'il reçoive des télégrammes d'appel du maître de remplacement ou jusqu'à la réception d'un télégramme de libération ou d'autorisation, et
que le maître de remplacement maintient son fonctionnement d'appel jusqu'à ce qu'il ait reçu, lors de son appel, un télégramme de réponse de la part de toutes les unités à processeur de la section de localisation.

2. Procédé suivant la revendication 1, caractérisé par le fait que toutes les unités à processeur signalent, respectivement dans un télégramme de réponse particulier immédiatement suivant, si, à l'intérieur du cycle d'appel précédent, un télégramme correspondant de réponse a suivi chaque télégramme d'appel, de sorte que, par conséquent, l'emplacement de l'interruption à l'intérieur également d'un seul dispositif de transmission peut être déterminé, et ce également à l'emplacement du maître qui n'envoie pas d'appel.
